(19) Europäisches Patentamt
European Patent Office
Office européen des brevets

(11) EP 4 582 172 A1

(12) EUROPEAN PATENT APPLICATION
published in accordance with Art. 153(4) EPC

(43) Date of publication:
09.07.2025 Bulletin 2025/28

(21) Application number: 23860122.3

(22) Date of filing: 22.08.2023

(51) International Patent Classification (IPC):
B01D 61/00 (2006.01)      B01D 63/02 (2006.01)
B01D 69/00 (2006.01)      B01D 69/08 (2006.01)
B01D 71/26 (2006.01)      D01F 6/04 (2006.01)

(52) Cooperative Patent Classification (CPC):
B01D 61/00; B01D 63/02; B01D 69/00;
B01D 69/08; B01D 71/26; D01F 6/04

(86) International application number:
PCT/JP2023/030075

(87) International publication number:
WO 2024/048359 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.08.2022 JP 2022136661

(71) Applicant: Toray Industries, Inc.
Tokyo 103-8666 (JP)

(72) Inventors:
• AKUTSU, Miku
Otsu-shi, Shiga 520-8558 (JP)
• TAKADA, Koichi
Otsu-shi, Shiga 520-8558 (JP)
• OGAWA, Takafumi
Otsu-shi, Shiga 520-8558 (JP)
• HANAKAWA, Masayuki
Tokyo 103-8666 (JP)
• TAGUCHI, Marina
Otsu-shi, Shiga 520-8558 (JP)
• EIMURA, Hiroki
Otsu-shi, Shiga 520-8558 (JP)
• AOYAMA, Shigeru
Otsu-shi, Shiga 520-8558 (JP)
• YAMAMURA, Gohei
Otsu-shi, Shiga 520-8558 (JP)

(74) Representative: Kador & Partner Part mbB
Corneliusstraße 15
80469 München (DE)

(54) SEPARATION MEMBRANE AND METHOD FOR MANUFACTURING SAME

(57) A separation membrane including poly(4-methyl-1-pentene) as a main component, a dense layer in at least one surface layer, and a lamellar crystal at an area ratio of 5 to 50% in a surface (1) on a side having the dense layer. According to the present invention, a separation membrane having high solvent resistance and high gas permeability is provided using poly(4-methyl-1-pentene).

**Description**

TECHNICAL FIELD

The present invention relates to a separation membrane and a method for manufacturing the separation membrane.

BACKGROUND ART

Examples of a degassing method of removing a dissolved gas from a liquid and a gas exchange method of exchanging a dissolved gas in a liquid and a gas component in a gas phase include a method using a hollow fiber membrane. Hollow fiber membranes used for these applications are required to have solvent resistance to liquids to be treated and high gas permeability, and therefore poly(4-methyl-1-pentene) excellent in these properties is sometimes used as a membrane material. In particular, a membrane having a dense layer on at least one surface is desirable in that the solvent resistance can be enhanced because entry of a solvent into the membrane can be suppressed by bringing the side having the dense layer into contact with the solvent.

Various methods have been proposed so far in order to obtain a gas-permeable membrane having high gas permeability using poly(4-methyl-1-pentene) as a membrane material. For example, Patent Document 1 discloses a wet method using a polyolefin-based polymer. Specifically, a polymer solution in which a polyolefin-based polymer is dissolved in a good solvent is extruded from a spinneret at a temperature higher than the melting point of a polyolefin resin, and this polymer solution is brought into contact with a cooling solvent to form a membrane having an asymmetric structure having a dense layer on one surface by thermally induced phase separation.

Patent Document 2 discloses a method for manufacturing a hollow fiber membrane by a melting method. Specifically, a polyolefin-based resin is extruded from a spinneret at a temperature equal to or higher than the melting point and thus cooled and solidified, and then stretched to be partially cleaved to open pores in the polyolefin-based resin, and thus a hollow fiber membrane is formed that has a porous structure in which the surface layer is dense and the inside is porous.

PRIOR ART DOCUMENT

PATENT DOCUMENTS

Patent Document 1: National Publication of International Patent Application No. 2002-535114
Patent Document 2: Japanese Patent Laid-open Publication No. 7-116483

SUMMARY OF THE INVENTION

PROBLEMS TO BE SOLVED BY THE INVENTION

According to findings by the present inventors, it is difficult for the separation membrane of Patent Document 1 to achieve high solvent resistance. In addition, according to findings by the present inventors, the separation membrane obtained in Patent Document 2 has high strength, but has insufficient porosity, and does not have sufficient gas permeability, and the solvent resistance of the separation membrane is insufficient. As described above, the conventional membranes containing poly(4-methyl-1-pentene) as a main component have not exhibited sufficient solvent resistance.

In view of the above problems of the prior art, the present inventors intend to provide a separation membrane having particularly high solvent resistance using poly(4-methyl-1-pentene).

SOLUTIONS TO THE PROBLEMS

As a result of intensive studies to solve the above problems, the present inventors have found that among membranes containing poly(4-methyl-1-pentene) as a main component, ones in which a surface on a side having a dense layer, that is, a membrane surface of a wetted part is formed by accumulation of a lamellar crystal have higher solvent resistance than ones in which lamellar growth is not progressed, and the present invention has been completed.

That is, the separation membrane of the present invention includes:

poly(4-methyl-1-pentene) as a main component;

a dense layer in at least one surface layer; and
a lamellar crystal at an area ratio of 5 to 50% in a surface (1) on a side having the dense layer.

EFFECTS OF THE INVENTION

According to the present invention, a separation membrane having high solvent resistance and high gas permeability is provided using poly(4-methyl-1-pentene).

BRIEF DESCRIPTION OF THE DRAWINGS

Fig. 1 is an example of a 10,000 times SEM image of a section obtained by cutting a separation membrane in the thickness direction.

Fig. 2 is an image obtained by binarizing the image of Fig. 1 and then removing noise.

Fig. 3 shows the dense layer thickness obtained by extracting the outline of voids larger than 10 nm from the image of Fig. 2.

Fig. 4 is an example of a 60,000 times SEM image of a surface of a separation membrane.

Fig. 5 is an example of an image obtained by clipping a 60,000 times SEM image of a surface of a separation membrane into $512 \times 512$ pixels.

Fig. 6 is an image obtained by Fourier transform of Fig. 5.

Fig. 7 illustrates a range from -90° to 90° with a length of 50 pixels from the center of the image in Fig. 6.

Fig. 8 is a graph obtained by setting the horizontal direction of the image of Fig. 6 to 0°, calculating the average intensity in a range of 4° with a length of 50 pixels from the center point of the image sequentially in the range from -90° to 90°, and creating a graph with a horizontal axis representing the angle from the center point and a vertical axis representing the average intensity at each angle.

EMBODIMENTS OF THE INVENTION

The separation membrane of the present invention includes poly(4-methyl-1-pentene) as a main component, a dense layer in at least one surface layer, and a lamellar crystal at an area ratio of 5 to 50% in a surface (1) on a side having the dense layer. In the present description, the mass-based proportion (percentage, part, etc.) is the same as the weight-based proportion (percentage, part, etc.).

(Resin Composition Constituting Separation Membrane)

The resin composition constituting the separation membrane of the present invention includes poly(4-methyl-1-pentene) shown in (1) below (hereinafter, referred to as "PMP") as a main component. In addition to (1) PMP, components shown in (2) to (6) below can be contained.

(1) Poly(4-methyl-1-pentene) (hereinafter, referred to as "PMP")

The separation membrane of the present invention needs to include PMP as a main component. The main component as used herein refers to a component included in the largest amount in terms of mass among all components included in the separation membrane.
PMP is a polymer having a repeating unit derived from 4-methyl-1-pentene. PMP may be a homopolymer of 4-methyl-1-pentene, or a copolymer with a monomer, other than 4-methyl-1-pentene, copolymerizable with 4-methyl-1-pentene. Specific examples of the monomer copolymerizable with 4-methyl-1-pentene include olefins having 2 to 20 carbon atoms other than 4-methyl-1-pentene (hereinafter referred to as "olefins having 2 to 20 carbon atoms"). In the case of a copolymer, the molar ratio of the repeating unit derived from 4-methyl-1-pentene to other repeating units in the copolymer is preferably in the range of 4-methyl-1-pentene/other repeating units = 100/0 to 50/50, more preferably 100/0 to 85/15, and still more preferably 100/0 to 90/10.

Examples of the olefins having 2 to 20 carbon atoms copolymerized with 4-methyl-1-pentene include ethylene, propylene, 1-butene, 1-hexene, 1-heptene, 1-octene, 1-decene, 1-tetradecene, 1-hexadecene, 1-heptadecene, 1-octadecene, and 1-eicosene.

The olefins having 2 to 20 carbon atoms copolymerized with 4-methyl-1-pentene may be one kind of olefins or two or more kinds of olefins used in combination.

PMP used in the present invention preferably has a density of 825 to 840 ($kg/m^3$), and more preferably 830 to 835 ($kg/m^3$). If PMP has a density smaller than the above range, the mechanical strength of the separation membrane deteriorates, and a problem such as easy occurrence of a defect may occur. Meanwhile, if the density is larger than the above range, the gas permeability of the separation membrane tends to deteriorate.

The melt flow rate (MFR) of PMP measured at 260°C under a load of 5 kg is not particularly limited as long as the PMP is easily mixed and can be coextruded with a plasticizer (B) described below, and the MFR is preferably 1 to 200 g/10 min, and more preferably 5 to 30 g/10 min. If the MFR is in the above-described range, it is easy to perform extrusion molding to a relatively uniform membrane thickness.

PMP may be directly manufactured by polymerizing olefins, or may be manufactured by thermally decomposing a high molecular weight 4-methyl-1-pentene-based polymer. The 4-methyl-1-pentene-based polymer may be purified with a method such as solvent fractionation in which a difference in solubility with respect to a solvent is used for fractionation, or molecular distillation in which a difference in boiling point is used for fractionation.

In addition to PMP manufactured as described above, a commercially available polymer such as "TPX (registered trademark) manufactured by Mitsui Chemicals, Inc. may be used as PMP.

The content of PMP in the separation membrane is preferably 70 to 100 mass%, more preferably 80 to 100 mass%, and still more preferably 90 to 100 mass% with respect to 100 mass% of all components in the separation membrane. If the content of PMP in the separation membrane is 70 mass% or more, the gas permeability is sufficient.

(2) Plasticizer for PMP

The resin composition constituting the separation membrane of the present invention can contain a plasticizer for PMP. From the viewpoint of enhancing the permeability, the content of the plasticizer in the separation membrane is preferably 1000 ppm (mass basis) or less, more preferably 500 ppm (mass basis) or less, and particularly preferably 100 ppm (mass basis) or less.

The plasticizer for PMP is not particularly limited as long as it is a compound that thermoplasticizes PMP. As the plasticizer for PMP, not only one plasticizer but also two or more plasticizers may be used in combination.

Examples of the plasticizer for PMP include palm kernel oil, dibutyl phthalate, dioctyl phthalate, dibenzyl ether, coconut oil, and mixtures thereof. Among them, a compound selected from dibutyl phthalate and dibenzyl ether is preferably used from the viewpoint of compatibility and stringiness.

The plasticizer for PMP is preferably eluted from the separation membrane after formation of the separation membrane.

(3) Additive

The resin composition constituting the separation membrane of the present invention may contain an additive other than those described in (2) as long as an effect of the present invention is not impaired.

Examples of the additive include resins such as cellulose ethers, polyacrylonitrile, polyolefins, polyvinyl compounds, polycarbonate, poly(meth)acrylates, polysulfone, and polyethersulfone, organic lubricants, crystal nucleating agents, organic particles, inorganic particles, end-capping agents, chain extenders, ultraviolet absorbers, infrared absorbers, coloring inhibitors, matting agents, antibacterial agents, electrostatic removers, deodorants, flame retardants, anti-weathering agents, antistatic agents, antioxidants, ion exchangers, antifoaming agents, coloring pigments, optical brighteners, and dyes.

(Shape of Separation Membrane)

As the separation membrane of the present invention, a separation membrane having a hollow fiber shape (hereinafter, referred to as "hollow fiber membrane") is preferably employed. The hollow fiber membrane is preferable because the hollow fiber membrane can be efficiently filled into a module to increase an effective membrane area per unit volume of the module.

The shape of the separation membrane in the present invention, that is, the thickness of the separation membrane, the outer diameter and the inner diameter in a case where the separation membrane is a hollow fiber membrane, and the hollowness can be observed by, for example, observing a section obtained by applying a stress to the separation membrane sufficiently cooled in liquid nitrogen and cutting the membrane in the thickness direction (hereinafter, referred to as a "radial section") using an optical microscope or a scanning electron microscope (SEM). A specific method will be described in detail in Examples.

The thickness of the separation membrane is preferably 10 to 500 $\mu$m from the viewpoint of achieving both permeability and membrane strength. The thickness is more preferably 30 $\mu$m or more, and still more preferably 50 $\mu$m or more. The thickness is more preferably 200 $\mu$m or less, still more preferably 150 $\mu$m or less, and particularly preferably 100 $\mu$m or less.

The outer diameter of the hollow fiber membrane is preferably 50 to 2500 $\mu$m from the viewpoint of achieving both the effective membrane area of a module filled with the hollow fiber membrane and the membrane strength. The outer diameter of the hollow fiber membrane is more preferably 100 $\mu$m or more, still more preferably 200 $\mu$m or more, and particularly preferably 300 $\mu$m or more. The outer diameter is more preferably 1000 $\mu$m or less, still more preferably 500 $\mu$m or less, and particularly preferably 450 $\mu$m or less.

From the relationship between the pressure loss of the fluid flowing through the hollow portion and the buckling pressure, the inner diameter of the hollow fiber membrane is preferably 20 to 1000 $\mu$m. The inner diameter of the hollow fiber membrane is more preferably 50 $\mu$m or more, still more preferably 100 $\mu$m or more, and particularly preferably 150 $\mu$m or more. The inner diameter is more preferably 500 or less, still more preferably 300 $\mu$m or less, and particularly preferably 250 $\mu$m or less.

From the relationship between the pressure loss of the fluid flowing through the hollow portion and the buckling pressure, the hollowness of the hollow fiber membrane is preferably 15 to 70%. The hollowness is more preferably 20% or more, and still more preferably 25% or more. The hollowness is more preferably 60% or less, still more preferably 50% or less, and particularly preferably 40% or less.

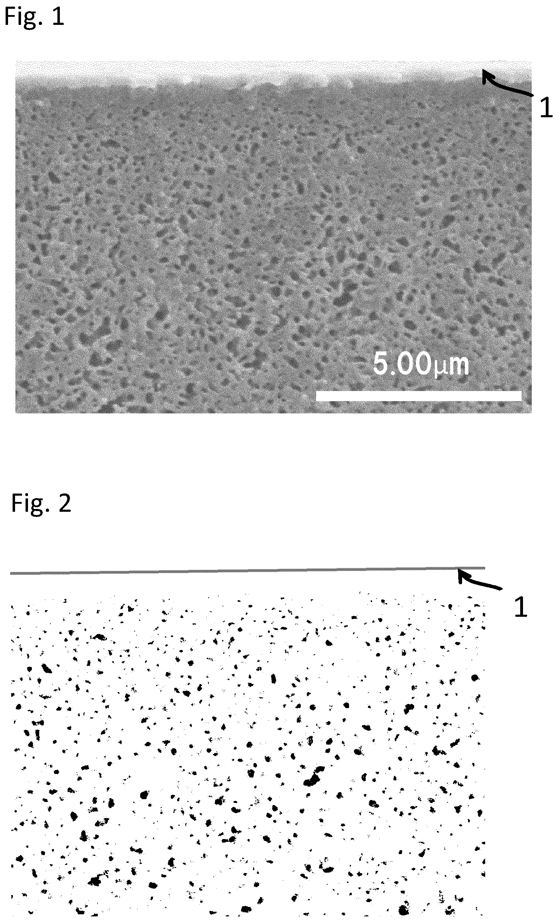

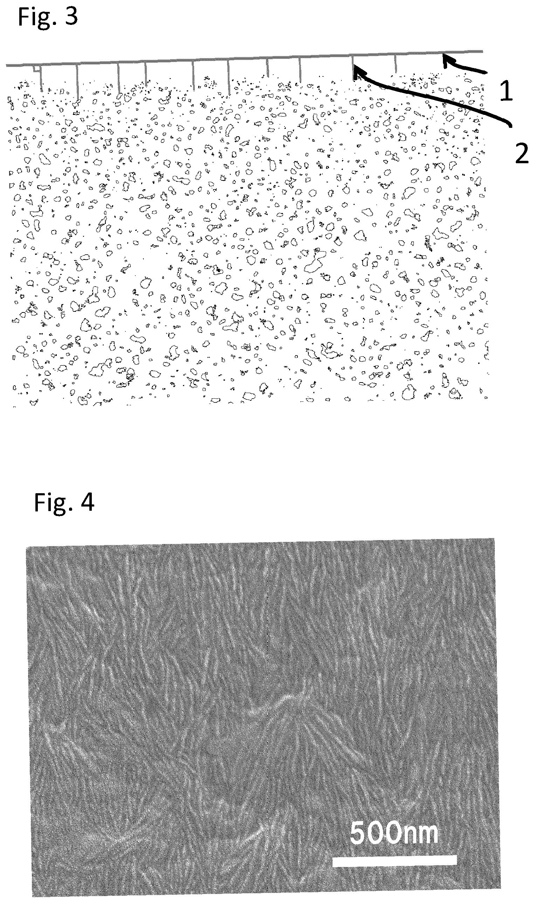

Fig. 1 shows an example of a 10,000 times SEM image of a section obtained by cutting the separation membrane in the thickness direction, Fig. 2 shows an image obtained by removing noise in the image of Fig. 1 and binarizing the image, and Fig. 3 shows the dense layer thickness obtained by extracting the outline of voids larger than 10 nm from the image of Fig. 2.

The method of setting the outer diameter, the inner diameter, and the hollowness of the hollow fiber in the hollow fiber membrane within the above-described ranges is not particularly limited. For example, the outer diameter, the inner diameter, and the hollowness can be adjusted by appropriately changing the shape of the discharge hole of the spinneret for manufacture of the hollow fiber, or the draft ratio, which can be calculated by the winding speed/the discharge speed.

The separation membrane of the present embodiment includes a dense layer in at least one surface layer. In a case where the separation membrane is a hollow fiber membrane, the dense layer may be on the outer surface side, on the inner surface side, or on both the outer surface and the inner surface. Here, the dense layer refers to a portion, in a case where a section obtained by cutting the separation membrane in the thickness direction is observed with a SEM at a magnification of 10,000 times, between an arbitrary point on a surface 1 of the separation membrane and a pore having a diameter more than 10 nm and first reached by a straight line drawn perpendicularly to the surface from the arbitrary point toward the other surface side. That is, in the separation membrane, a portion having no pore having a diameter more than 10 nm in a surface layer is a dense layer. In the separation membrane, the layer excluding the dense layer is referred to as a support layer. That is, the support layer is a portion having a pore having a diameter more than 10 nm in the separation membrane.

For example, a stress is applied to the separation membrane sufficiently cooled in liquid nitrogen (using a razor blade, a microtome, or a broad ion beam as necessary) to cut the separation membrane so that a section perpendicular to the separation membrane longitudinal direction and parallel to the membrane thickness direction (hereinafter, referred to as "transverse section") or a section parallel to the separation membrane longitudinal direction and parallel to the membrane thickness direction (hereinafter, referred to as "longitudinal section") is exposed. The section is observed with a SEM, the obtained image is binarized with image analysis software "ImageJ", then only pores larger than 10 nm are extracted, and thus the dense layer and the support layer can be distinguished. The transverse section of the hollow fiber membrane is synonymous with the radial section. The longitudinal direction of the hollow fiber membrane is a direction perpendicular to the lateral direction of the hollow fiber membrane. The lateral direction of the hollow fiber membrane is a direction parallel to the radial direction of the hollow fiber membrane, and the lateral direction can also be referred to as the direction parallel to the hollow surface, that is, the in-plane direction of the hollow surface. Therefore, the longitudinal direction of the hollow fiber membrane can also be referred to as the direction perpendicular to the hollow surface. A dense layer thickness 2 is the length, in the SEM image, between an arbitrary point on the outer surface 1 of the separation membrane and a pore having a diameter more than 10 nm and first reached by a straight line drawn perpendicularly to the outer surface from the arbitrary point toward the inner surface side. A specific measurement method will be described in detail in Examples.

The thickness of the dense layer is preferably 0.1 to 0.8 $\mu$m. If the thickness of the dense layer is 0.1 $\mu$m or more, the leakage resistance is improved, and if the thickness is 0.8 $\mu$m or less, the permeability is improved.

The thickness of the dense layer is more preferably 0.1 to 0.6 $\mu$m. The thickness of the dense layer is still more preferably 0.1 to 0.5 $\mu$m, and particularly preferably 0.1 to 0.4 $\mu$m.

The separation membrane of the present embodiment has a plurality of voids in the support layer. Each void in the support layer is a recess having a diameter more than 10 nm in a case where the support layer in the transverse section or the longitudinal section of the separation membrane is observed with a SEM. The support layer preferably has 10 or more voids per visual field (length: about 45 $\mu$m, width: about 63 $\mu$m) in a case where the support layer in the transverse section or the longitudinal section is observed with a SEM at a magnification of 2,000 times. Meanwhile, in the separation membrane of the present embodiment, the number of voids larger than 10 $\mu$m in the support layer is preferably 3 or less per visual field in a case where the transverse section or the longitudinal section is observed with a SEM at a magnification of 2,000 times. If the number of voids larger than 10 $\mu$m in the support layer is 3 or less, the strength of the separation membrane is improved. The voids larger than 10 $\mu$m in the support layer can be measured by observing the transverse section or the longitudinal section of the separation membrane with a SEM at a magnification of 2,000 times, binarizing the obtained image with image analysis software "ImageJ", and then extracting only pores having an average diameter of more than 10 $\mu$m. The number of voids larger than 10 $\mu$m in the support layer is more preferably 2 or less, still more preferably 1 or less, and particularly preferably 0. A method of measuring voids larger than 10 $\mu$m in the support layer will be described in detail in Examples.

In the separation membrane of the present embodiment, the support layer preferably has an average pore diameter of 100 to 1000 nm. The average pore diameter of the support layer can be measured by observing the transverse section or the longitudinal section of the separation membrane with a SEM at a magnification of 10,000 times, binarizing the obtained image with image analysis software "ImageJ", and then extracting pores having an average diameter of more than 10 nm. If the average pore diameter of the support layer is 100 nm or more, the permeability of the separation membrane is improved, and if the average pore diameter is 1000 nm or less, the strength of the separation membrane is improved. The average pore diameter of the support layer is preferably 100 to 800 nm, more preferably 100 to 600 nm, still more preferably 100 to 570 nm, and particularly preferably 100 to 500 nm. A method of measuring the average pore diameter of the support layer will be described in detail in Examples.

(Porosity)

The separation membrane of the present invention preferably has a porosity of 30% or more and 70% or less. If the porosity is 30% or more, the permeability of the separation membrane is improved, and if the porosity is 70% or less, the membrane strength is improved. The porosity is preferably 40% or more and 65% or less, more preferably 45% or more and 60% or less, and particularly preferably 53% or more and 60% or less. In order to obtain a porosity in such a range, structure formation using thermally induced phase separation described below is preferably used. The porosity here refers to the porosity of the entire separation membrane. A specific method of measuring the porosity will be described in detail in Examples.

(Lamellar Crystal on Surface)

In the separation membrane of the present invention, it is important that the area ratio of the lamellar crystal in the surface (1) on the side having the dense layer is 5 to 50%. A ratio of the lamellar crystal in the surface (1) of 5% or more is preferable in that high solvent resistance can be obtained. If the ratio is 50% or less, the permeability is improved.

In the present invention, the surface (1) on the side having the dense layer is a surface on the side where the dense layer is observed by sectional SEM observation. The observation of the dense layer by sectional SEM observation is as described above. The lamellar crystal in the surface (1) on the side having the dense layer refers to a portion observed as a streaky protrusion, that is, a streaky bright part in an image obtained by observing the surface (1) with a SEM at a magnification of 60,000 times. In a case where the separation membrane has a hollow fiber shape, the surface (1) on the side having the dense layer is preferably an outer surface. Fig. 4 shows an example of a 60,000 times SEM image of the surface of the separation membrane.

The area ratio of the lamellar crystal in the surface (1) is preferably 20 to 50%, more preferably 23 to 46%, still more preferably 23 to 45%, and particularly preferably 30 to 40%.

The lamellar crystal preferably has a period of 10 to 80 nm in the surface (1). If the period of the lamellar crystal is 10 nm or more, the solvent resistance of the separation membrane is improved, and if the period is 80 nm or less, the permeability of the separation membrane is improved. The period of the lamellar crystal is more preferably 20 to 50 nm, still more preferably 25 to 45 nm, and particularly preferably 30 to 45 nm. A specific method of measuring the period of the lamellar crystal will be described in Examples.

(Presence or Absence of Orientation of Lamellar Crystal on Surface, Orientation Direction of Lamellar Crystal)

In the separation membrane of the present invention, the lamellar crystal on the surface is preferably oriented. If the lamellar crystal on the surface is oriented, a gap in the lamellar crystal, that is, an amorphous portion is reduced, and such a condition is preferable in that the separation membrane is excellent in solvent resistance. The presence or absence of the orientation of the lamellar crystal can be confirmed with the method described below.

In the present invention, the orientation direction of the lamellar crystal refers to an angle formed by the longitudinal direction of the lamellar crystal and the longitudinal direction of the separation membrane, and can be determined from a surface SEM image of the separation membrane. The orientation direction of the lamellar crystal is preferably 60 to 120°, more preferably 65 to 115°, and still more preferably 70 to 110°.

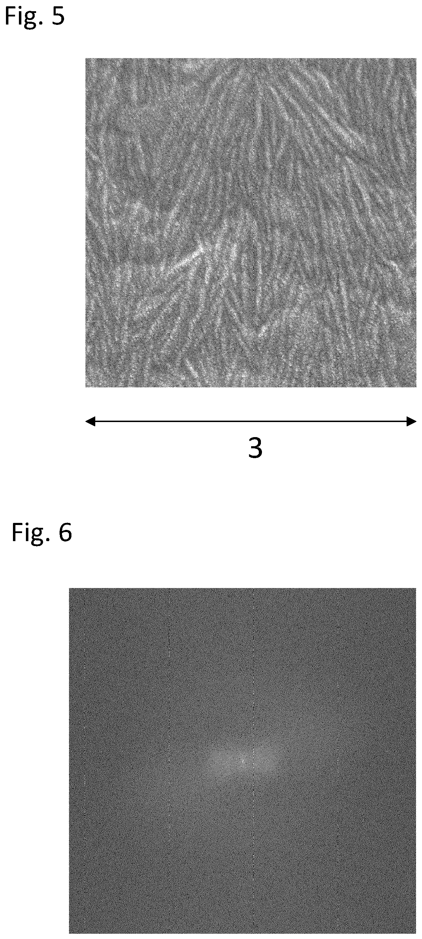

A method of measuring the orientation direction of the lamellar crystal will be specifically described below. For the measurement of the orientation direction of the lamellar crystal, a surface SEM image captured at a magnification of 60,000 times so that a separation membrane longitudinal direction 3 is the horizontal direction is used as shown in Fig. 5. Fourier transform of the surface SEM image provides a circular image. In a sample in which the lamellar crystal is not oriented, a large change in intensity is not observed along the circle, but in a sample in which the lamellar crystal is oriented, a deviation occurs in the intensity distribution on the circle. Therefore, the orientation direction can be determined from the intensity distribution. More specifically, the SEM image is clipped into $512 \times 512$ pixels, the obtained image is subjected to Fourier transform, then the horizontal direction of the Fourier-transformed image is set to 0°, and a range of 4° with a length of 50 pixels from the center point of the Fourier-transformed image is sequentially scanned in a range from -90° to 90°. For each scan, the average intensity in the scanned range is calculated. This scan is performed every 4° from -90° to 90°, and thus a graph is created in which the scan angle is plotted on the horizontal axis and each average intensity is plotted on the vertical axis. An angle obtained by adding 90° to an angle indicating the maximum value in this graph is taken as the orientation direction of the lamellar crystal.

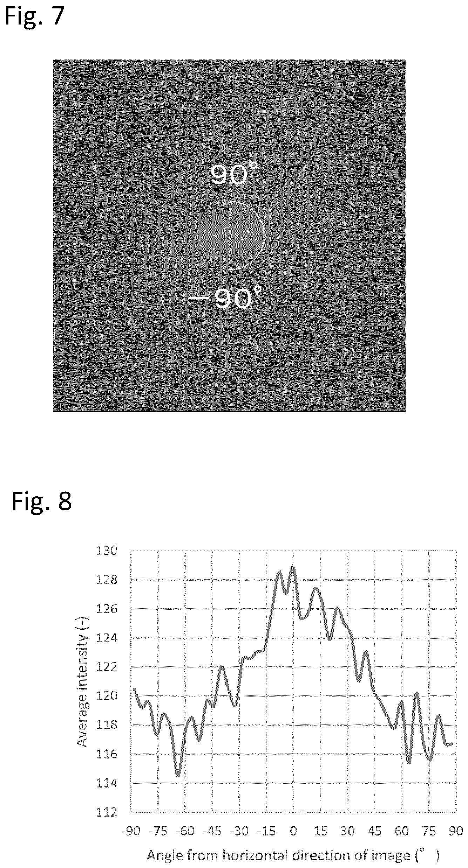

Fig. 5 shows an example of an image obtained by clipping a 60,000 times SEM image of the surface of the separation membrane into $512 \times 512$ pixels, and Fig. 6 shows an image obtained by Fourier transform of the image of Fig. 5. Fig. 7 illustrates the range from -90° to 90° with a length of 50 pixels from the center of the image in Fig. 6. Fig. 8 shows a graph created by scanning the range from -90° to 90° in the image of Fig. 6 as described above and plotting the results. An angle obtained by adding 90° to an angle indicating the maximum value in this graph is the orientation direction of the lamellar crystal.

The presence or absence of the orientation of the lamellar crystal can be confirmed with the following method. In a graph in which the scan angle is plotted on the horizontal axis and the average intensity at each angle is plotted on the vertical axis as described above, in a case where the minimum value and the maximum value of the average intensity are not different by 5% or more, that is, the value of $100 \times$ (MAX - MIN)/MAX, wherein MAX represents the maximum value of the average intensity and MIN represents the minimum value, is 5 or less, the lamellar crystal is considered to be not oriented.

(Crystallinity of Outer Surface)

In the separation membrane of the present invention, the surface (1) preferably has a crystallinity of 5 to 30%. If the crystallinity of the surface (1) is 5% or more, the solvent resistance of the separation membrane is improved, and if the crystallinity is 30% or less, the permeability of the separation membrane is improved. The crystallinity of the surface (1) is a value determined by infrared spectroscopy (hereinafter, sometimes referred to as "IR"), and a specific measurement method will be described in Examples. The crystallinity of the surface (1) is more preferably 15 to 30%, still more preferably 17 to 30%, and particularly preferably 20 to 28%.

(Gas Permeability)

The separation membrane of the present invention preferably has a $N_2$ permeability of 5 GPU or more at a differential pressure of 100 kPa at 37°C. The $N_2$ permeability is more preferably 10 GPU or more, still more preferably 40 GPU or more, still even more preferably 50 GPU or more, and particularly preferably 60 GPU or more. The calculation method will be described in detail in Examples.

($CO_2/N_2$ Selectivity)

The permeation in a polymer membrane generally depends on the pore size in the membrane. In the dense layer, a gas permeates through a dissolution-diffusion mechanism. In this case, the separation coefficient $\alpha$ indicating the ratio of the permeation coefficient P or the permeation flow rate Q between two gases depends only on the polymer material forming the dense layer, and does not depend on the thickness of the dense layer. When the gas separation coefficient of $CO_2$ and $N_2$ is represented by $\alpha(CO_2/N_2)$, the permeation coefficients of $CO_2$ and $N_2$ are represented by $P(CO_2)$ and $P(N_2)$, respectively, and the permeation flow rates of $CO_2$ and $N_2$ are represented by $Q(CO_2)/Q(N_2)$, respectively, the gas separation coefficient $\alpha(CO_2/N_2)$ can be expressed as $P(CO_2)/P(N_2)$ or $Q(CO_2)/Q(N_2)$. In commonly used polymers, the

value of $\alpha(CO_2/N_2)$ to be obtained is at least 1.

Meanwhile, in the support layer, a gas permeates mainly through "Knudsen diffusion". In this case, the gas separation coefficient $\alpha$ is obtained by the square root of the ratio of the molecular weight between gases. Therefore, $\alpha(CO_2/N_2)$ is $\sqrt{28/44}$ = 0.80.

The separation membrane of the present invention has the dense layer, and thus has a very long leakage time. On the other hand, the separation membrane having no dense layer has a short leakage time. As described above, in the dense layer, the gas permeation is performed through a dissolution-diffusion mechanism, and in the support layer, the gas permeation is performed through Knudsen diffusion. That is, the denseness of the separation membrane due to the presence of the dense layer can be evaluated by measuring $\alpha(CO_2/N_2)$.

A membrane having a gas separation coefficient $\alpha(CO_2/N_2)$ of less than 1 has a large number of pores or defects in the dense layer. The presence of a large number of pores or defects in the dense layer causes premature liquid leakage or plasma leakage. Such a separation membrane is not suitable for long-time use. Similarly, such a separation membrane cannot be used in the field of gas separation. On the other hand, a separation membrane having a gas separation coefficient $\alpha(CO_2/N_2)$ of 1.0 or more has a low leakage property. Therefore, the gas separation coefficient $\alpha(CO_2/N_2)$ of the separation membrane of the present invention is preferably 1.0 or more, more preferably 2.0 or more, still more preferably 3.0 or more, and particularly preferably 4.0 or more.

(Permeability Change Rate before and after Immersion in Chloroform)

When X represents the $N_2$ permeability of the separation membrane at a differential pressure of 100 kPa and Y represents the $N_2$ permeability of the same separation membrane measured at a differential pressure of 100 kPa in the same manner after immersion in chloroform for 5 seconds, the value of the $N_2$ permeability change rate Y/X is preferably 0.3 to 1.2. If the value of the $N_2$ permeability change rate Y/X is 0.3 to 1.2, the solvent resistance is improved. A specific method of measuring the $N_2$ permeability will be described in Examples. The value of the $N_2$ permeability change rate Y/X is more preferably 0.45 to 1.2, still more preferably 0.5 to 1.2, and particularly preferably 0.7 to 1.2.

(Method for Manufacturing Separation Membrane)

The method for manufacturing a separation membrane of the present invention includes the following steps (1) to (2).

> (1) A preparation step of melt-kneading a mixture containing 10 to 50 mass% or less of PMP and 50 to 90 mass% of a plasticizer to obtain a resin composition.
> (2) A forming step of discharging the resin composition from a discharge spinneret having a gap of 0.05 to 0.3 mm, and
>
> after the resin composition is passed through an air gap having a distance from a bottom surface of the discharge spinneret to a solvent surface of 30 to 80 mm,
> winding the resin composition to obtain a resin molded product.

Next, the method for manufacturing a separation membrane of the present invention will be specifically described with reference to an example of a case where the separation membrane is a hollow fiber membrane.

(Preparation Step)

In the preparation step in which a resin composition is obtained for manufacture of the separation membrane of the present invention, a mixture containing 10 to 50 mass% of PMP and 50 to 90 mass% of a plasticizer is melt-kneaded. If the content of PMP is 10 mass% or more, the membrane strength of the separation membrane is improved. Meanwhile, if the content of PMP is 50 mass% or less, the permeability of the separation membrane is improved. If the content of the plasticizer is 90 mass% or less, the membrane strength of the separation membrane is improved. If the content of the plasticizer is 50 mass% or more, the permeability of the separation membrane is improved. The mixture preferably contains 15 to 50 mass% of PMP and 50 to 85 mass% of a plasticizer, more preferably 20 to 45 mass% of PMP and 55 to 80 mass% of a plasticizer, and particularly preferably 25 to 40 mass% of PMP and 60 to 75 mass% of a plasticizer.

As a device used for melt-kneading the mixture, a mixer or the like can be used such as a kneader, a roll mill, a Banbury mixer, or a single or twin-screw extruder. Among them, a twin-screw extruder is preferably used from the viewpoint of improving the uniform dispersibility of the plasticizer, and a twin-screw extruder with a vent hole is more preferably used from the viewpoint of capability of removing a volatile such as moisture or a low molecular weight substance. From the viewpoint of enhancing the kneading strength and improving the uniform dispersibility of the plasticizer, a twin-screw extruder with a screw having a kneading disk part is preferably used. The temperature in the preparation step depends on the melting point of PMP and the decomposition temperature of the plasticizer, and is preferably 220 to 300°C, and more preferably 240 to 290°C.

The resin composition obtained in the preparation step may be pelletized once and melted again for use in melt membrane formation, or may be directly introduced into a spinneret for use in melt membrane formation. In a case where the resin composition is pelletized once, it is preferable to dry the pellet to adjust the water content to 200 ppm (mass basis) or less and use the resulting resin composition. If the water content is 200 ppm (mass basis) or less, deterioration of the resin can be suppressed.

(Forming step)

In the forming step of the separation membrane, the molten mixture of PMP and the plasticizer, that is, the resin composition is discharged from a discharge spinneret, passed through an air gap, then introduced into a cooling bath and subjected to thermally induced phase separation, and then wound to obtain a separation membrane.

Hereinafter, a case where the separation membrane is a hollow fiber membrane will be described. A specific method is such that a hollow portion forming gas is discharged from an inner tube in a double-tube spinneret while the resin composition, in a molten state, obtained in the preparation step is discharged from an outer tube in a double-annular nozzle for spinning. The temperature of the discharge portion (melt spinning pack) depends on the melting point of PMP and the decomposition temperature of the plasticizer, and is preferably 220 to 280°C, and more preferably 230 to 270°C. At this time, it is important that the size of the discharge gap of the discharge spinneret is 0.05 to 0.30 mm. Here, the discharge gap refers to the slit gap of the outer tube in the double tube nozzle. It is presumed that if the discharge gap of the discharge spinneret is in this range, high shear is imparted to the resin composition in a molten state and thus crystallization easily occurs to promote formation of a lamellar crystal. After the resin composition discharged in this manner travels in air (air gap), the resin composition is cooled and solidified in a cooling bath to obtain a separation membrane.

The discharge gap of the discharge spinneret is preferably 0.05 to 0.20 mm, and particularly preferably 0.05 mm to 0.13 mm.

The resin composition discharged from the discharge spinneret is preferably exposed to a gaseous atmosphere that promotes evaporation of the plasticizer, that is, an atmosphere in which evaporation of the plasticizer can occur before at least one of the surfaces of the resin composition, preferably a surface on which a dense layer can be formed is introduced into the cooling bath. The gas used for forming the gaseous atmosphere is not particularly limited, and air or nitrogen is preferably used. The gaseous atmosphere generally has a temperature lower than the discharge spinneret temperature.

It is important that the resin composition discharged from the discharge spinneret is introduced into the cooling bath after passing through the air gap having a size of 30 to 80 mm. If the resin composition is passed through the air gap having a size of 30 to 80 mm, crystallization easily proceeds to promote formation of a lamellar crystal, and at the same time, the stability of spinning is improved. Here, the air gap refers to a space from the bottom surface of the discharge spinneret to the surface of the solvent in the cooling bath. The "distance from the bottom surface of the spinneret to the surface of the solvent" may be referred to as "air gap distance".

The air gap distance is preferably 30 to 70 mm, more preferably 35 to 60 mm, and particularly preferably 40 to 50 mm.

Here, the cooling bath for cooling of the resin composition discharged from the discharge spinneret will be described.

The temperature of the cooling bath depends on the kind of the solvent used in the cooling bath, and is preferably 5 to 45°C, and more preferably 10 to 40°C.

The solvent in the cooling bath is preferably selected from the affinity for PMP and the plasticizer. As the solvent in the cooling bath, a solvent is preferably used that has a solubility parameter distance Ra to PMP in the range of 5 to 13 and a solubility parameter distance Rb to the plasticizer in the range of 4 to 10. In the cooling bath, a solvent is more preferably used in which Ra is in the range of 10 to 12 and Rb is in the range of 4 to 6. If Ra and Rb are in the above ranges, the dense layer can be thinned, and the permeability is improved.

The affinity between PMP and the solvent in the cooling bath can be calculated using three-dimensional Hansen solubility parameters, as described in the literature (Ind. Eng. Chem. Res. 2011, 50, 3798-3817). Specifically, the smaller the solubility parameter distance (Ra) in Formula (1) described below, the higher the affinity of the solvent for PMP.

[Mathematical Formula 1]

$$\text{Ra} = \sqrt{4(\delta_{Ad} - \delta_{Cd})^2 + (\delta_{Ap} - \delta_{Cp})^2 + (\delta_{Ah} - \delta_{Ch})^2} \quad \cdot\cdot\cdot\cdot\cdot\cdot \text{Formula (1)}$$

Here, $\delta_{Ad}$, $\delta_{Ap}$, and $\delta_{Ah}$ are a dispersion term, a polarity term, and a hydrogen bond term of the solubility parameter of PMP, respectively, and $\delta_{Cd}$, $\delta_{Cp}$, and $\delta_{Ch}$ are a dispersion term, a polarity term, and a hydrogen bond term of the solubility parameter of the solvent, respectively.

The affinity between the plasticizer and the solvent in the cooling bath can also be estimated in the same manner. Specifically, the smaller the solubility parameter distance (Rb) in Formula (2) described below, the higher the affinity of the solvent for the plasticizer.

[Mathematical Formula 2]

$$Rb = \sqrt{4(\delta_{Bd} - \delta_{Cd})^2 + (\delta_{Bp} - \delta_{Cp})^2 + (\delta_{Bh} - \delta_{Ch})^2} \quad \cdots \cdots \text{Formula (2)}$$

Here, $\delta_{Bd}$, $\delta_{Bp}$, and $\delta_{Bh}$ are a dispersion term, a polarity term, and a hydrogen bond term of the solubility parameter of PMP, respectively, and $\delta_{Cd}$, $\delta_{Cp}$, and $\delta_{Ch}$ are a dispersion term, a polarity term, and a hydrogen bond term of the solubility parameter of the solvent, respectively.

In a case where the solvent is a mixed solvent, the solubility parameter ($\delta_{Mixture}$) of the mixed solvent can be determined with Formula (3) described below.

[Mathematical Formula 3]

$$\delta_{Mixture} = \sum \Phi_i \delta_i \quad \cdots \cdots \text{Formula (3)}$$

Here, $\varphi_i$ and $\delta_i$ are a volume fraction and a solubility parameter of a component i, respectively, and Formula (3) is satisfied in each of a dispersion term, a polarity term, and a hydrogen bond term. Here, the "volume fraction of the component i" refers to the ratio of the volume of the component i before mixing to the sum of the volumes of all components before mixing. In a case where the three-dimensional Hansen solubility parameter of the solvent is described in the literature (Ind. Eng. Chem. Res. 2011, 50, 3798-3817), this value was used. As a solvent parameter not described in the literature, a value contained in the software "Hansen Solubility Parameter in Practice", which has been developed by Charles Hansen et al., was used. The three-dimensional Hansen solubility parameter of a solvent or a polymer not described in the software can be calculated with the Hansen sphere method using the software.

In the method for manufacturing a separation membrane of the present invention, in the case of using dibutyl phthalate as the plasticizer, the solvent used in the cooling bath in the forming step is preferably mono(2-ethylhexyl) phthalate, ditridecyl phthalate, diisodecyl phthalate, benzyl butyl phthalate, triacetin, ascorbyl palmitate, sorbitan monooleate, propylene glycol monostearate, methyl isoamyl ketone, methyl ethyl ketone, propylene glycol methyl ether acetate, N,N-dimethylacetamide, methyl isobutyl ketone, methyl oleate, methyl propyl ketone, methyl acetate, tributyl phosphate, N-methylpyrrolidone, tetrahydrofuran, 1-nitropropane, propyl propionate, butyl propionate, butyl glycol acetate, diisobutyl ketone, cyclopentyl methyl ether, amyl acetate, acetone, ethyl acetate, dimethyl isosorbide, 1,4-dioxane, 1,3-dioxane, ethylene glycol 2-ethylhexyl ether, or the like. Among them, solvents selected from benzyl butyl phthalate, methyl ethyl ketone, N-methylpyrrolidone, 1-nitropropane, and acetone are more preferable because Ra and Rb are within the above-described more preferable ranges.

In the forming step, the separation membrane solidified in the cooling bath is wound by a winding device. In this case, the value of the draft ratio calculated by (winding speed)/(discharge speed from discharge spinneret) by the winding device is preferably 1 to 10. The value of the draft ratio is more preferably 1 to 8. If the draft ratio is 1 or more, the winding is stabilized, and fluctuation in the separation membrane shape is reduced. If the draft ratio is 10 or less, excessive stretching of the resin composition discharged from the spinneret can be suppressed, and leakage due to generation of a defect in the dense layer can be suppressed.

(Washing Step)

The resin composition obtained as described above is subjected to a washing step of immersing the resin composition in a solvent that does not dissolve the polymer but is miscible with the plasticizer to elute the plasticizer from the separation membrane, and thus the porosity of the separation membrane can be enhanced. At this time, good solvent exchange is performed by using a solvent or a mixed solvent having moderate affinity for the plasticizer, and thus the washing efficiency is enhanced. The solvent used in the washing step is not particularly limited as long as it does not dissolve the separation membrane but is miscible with the plasticizer, and specific examples of a solvent used preferably include methanol, ethanol, isopropanol, and acetone.

(Residual Plasticizer)

The residual amount of the plasticizer after the washing step is preferably small. Specifically, the residual amount of the plasticizer in the resin composition constituting the separation membrane is preferably 1,000 ppm or less, more preferably 500 ppm or less, and still more preferably 100 ppm or less.

(Drying Step)

The resin composition after the washing step is preferably subjected to a drying step for the purpose of removing the solvent attached in the washing step. The drying temperature is preferably a temperature at which the solvent that does not dissolve the polymer but is miscible with the plasticizer is vaporized and can be removed, specifically, room temperature to 150°C.

Thus, the separation membrane of the present invention including PMP as a main component can be manufactured.

(Module)

The separation membrane of the present invention obtained as described above can be filled into a case with a conventionally known method to form a module. For example, a hollow fiber membrane module includes a plurality of hollow fiber membranes and a cylindrical case. A plurality of hollow fiber membranes are bundled and filled into a cylindrical case, and then the ends of the hollow fiber membranes are fixed to the case and sealed using a thermosetting resin such as polyurethane or an epoxy resin. After the thermosetting resin is cured, the ends of the hollow fiber membranes are cut to obtain an opening surface of the hollow fiber membranes, and thus a module is obtained.

The separation membrane of the present invention can be suitably used for separating a gas from a liquid or applying a gas to a liquid. For example, the separation membrane can be preferably used in a degassing membrane for a degassing membrane module that reduces the amount of a dissolved gas in a liquid in a semiconductor manufacturing line or the like.

The degassing membrane module includes a case and the separation membrane of the present invention, and the separation membrane is filled into the case. In the "degassing membrane module" of the present invention, the liquid to be treated is water, an organic solvent, or a mixture thereof, but not blood.

EXAMPLES

Hereinafter, the present invention will be described more specifically with reference to Examples, but the present invention is not limited thereto at all.

[Measurement and Evaluation Methods]

The characteristic values in Examples were determined with the following methods.

(1) Outer diameter and inner diameter ($\mu$m) of hollow fiber membrane

A hollow fiber membrane was frozen with liquid nitrogen, and then a stress was applied (using a razor blade or a microtome as necessary) to cut the hollow fiber membrane so that a radial section of the hollow fiber membrane was exposed. The exposed radial section was observed with an optical microscope, and the average values of the outer diameters and the inner diameters at 10 randomly selected points were taken as the outer diameter and the inner diameter of the hollow fiber membrane, respectively.

(2) Hollowness (%) of hollow fiber membrane

From the outer diameter and the inner diameter determined in (1) above, the hollowness of the hollow fiber membrane was calculated with the following formula.

Hollowness (%) = 100 $\times$ [inner diameter ($\mu$m$^2$)]$^2$/[outer diameter ($\mu$m$^2$)]$^2$

(3) Gas permeability (GPU)

A small module including 3 hollow fiber membranes and having an effective length of 100 mm was produced. Specifically, three hollow fiber membranes were bundled and inserted into a plastic pipe of a cylindrical case, and then a thermosetting resin was injected into a gap between the hollow fiber membranes and a gap between the hollow fibers and the pipe at the ends of the hollow fiber membrane bundle, and cured to seal the hollow fiber membranes. The ends of the sealed hollow fiber membranes were cut to obtain an opening surface of the hollow fiber membranes, and thus a small module for evaluation was produced. Using this small module and using each of carbon dioxide and nitrogen alone as a measurement gas for evaluation, the pressure change of carbon dioxide or nitrogen on the permeation side per unit time was measured with an external pressure method at a measurement temperature of 37°C in accordance with the pressure sensor method of JIS K 7126-1 (2006). Here, the pressure difference between the supply side and the permeation side was set to 100 kPa.

Subsequently, the permeation flow rate Q calculated with the following formula for each of carbon dioxide and nitrogen was taken as the $CO_2$ permeability and the $N_2$ permeability, respectively. Here, the membrane area was calculated from the outer diameter and the length of the hollow fiber membrane in the region contributing to gas permeation.

Permeation flow rate Q (GPU) = $10^{-6}$ [permeation gas amount ($cm^3$)]/[membrane area ($cm^2$) $\times$ time (s) $\times$ pressure difference (cmHg)]

The ratio $Q(CO_2)/Q(N_2)$ between the $CO_2$ permeability $Q(CO_2)$ and the $N_2$ permeability $Q(CO_2)$ measured as described above was taken as the gas separation coefficient $\alpha(CO_2/N_2)$.

Furthermore, the $N_2$ permeability change rate Y/X was measured in which X represents the $N_2$ permeability measured as described above and Y represents the $N_2$ permeability, at a differential pressure of 100 kPa, obtained by measuring the same hollow fiber membrane in the same manner after immersion in chloroform for 5 seconds.

(4) Dense layer thickness ($\mu$m)

In the same manner as in (1) above, the separation membrane was frozen with liquid nitrogen, and then a stress was applied (using a razor blade, a microtome, or a broad ion beam as necessary) to cut the separation membrane so that a radial section or a longitudinal section was exposed. Subsequently, the exposed section was sputtered with platinum under the following conditions, and then observed with a SEM at a magnification of 10,000 times.

The obtained image was binarized using image analysis software "ImageJ". The distribution of the number of pixels was obtained with a horizontal axis representing the luminance in the analysis image and a vertical axis representing the number of pixels at the corresponding luminance, the number of pixels at the luminance with the largest number of pixels was represented by A, the smaller luminance was taken as the threshold between two points of luminance at which the number of pixels was 1/2A, and thus the binarization was performed. The obtained binarized image was subjected once to noise removal (corresponding to Despeckle in ImageJ) in which all pixels were replaced with the median value of 3 $\times$ 3 pixels in the vicinity of each pixel, and the resulting image was used as an analysis image. Fig. 1 shows an example of a 10,000 times SEM image of a section obtained by cutting the separation membrane in the thickness direction, and Fig. 2 shows an image obtained by binarizing the image of Fig. 1 and then removing noise. Subsequently, pores were extracted by ImageJ using the Analyze Particles command. The dense layer thickness was determined as the length between an arbitrary point on the outer surface of the separation membrane and a pore having a diameter more than 10 nm and first reached by a straight line drawn perpendicularly to the outer surface from the arbitrary point toward the inner surface side. The measurement was performed at 10 arbitrary positions, and the average value thereof was adopted as the dense layer thickness. Fig. 3 shows the dense layer thickness obtained by extracting the outline of voids larger than 10 nm from the image of Fig. 2.

(Sputtering)

Device: (E-1010) manufactured by Hitachi High-Technologies Corporation
Deposition time: 40 seconds
Current value: 20 mA
(SEM)
Device: (SU1510) manufactured by Hitachi High-Technologies Corporation
Acceleration voltage: 5 kV
Probe current: 30

(5) Number of voids larger than 10 $\mu$m in support layer

In the same manner as in (1) above, the separation membrane was frozen with liquid nitrogen, and then a stress was applied (using a razor blade, a microtome, or a broad ion beam as necessary) to cut the separation membrane so that a radial section or a longitudinal section was exposed. Subsequently, the exposed section was sputtered with platinum under the following conditions, and then observed with a SEM at a magnification of 2,000 times. In the observed section, all pores having a diameter of more than 10 $\mu$m, that is, all pores having an area of more than 78.5 $\mu$m$^2$ per visual field were extracted, and the number of the pores was calculated. For a pore that was not entirely in the visual field at the end of the image, the diameter of the pore was calculated in this state. The extraction of the pores was performed after binarizing the analysis image (Huang binarization) with image analysis software "ImageJ". The obtained binarized image was subjected once to noise removal (corresponding to Despeckle in ImageJ) in which all pixels were replaced with the median value of 3 × 3 pixels in the vicinity of each pixel, and the resulting image was used as an analysis image. The extraction of the pores were performed by ImageJ using the Analyze Particles command, and the number of the obtained pores was calculated. The measurement was performed at 5 arbitrary positions, and the average value thereof was adopted as the number of voids larger than 10 $\mu$m in the support layer.

(Sputtering)

    Device: (E-1010) manufactured by Hitachi High-Technologies Corporation
Deposition time: 40 seconds
Current value: 20 mA
(SEM)
Device: (SU1510) manufactured by Hitachi High-Technologies Corporation
Acceleration voltage: 5 kV
Probe current: 30

(6) Average pore diameter of support layer (nm)

In the same manner as in (1) above, the separation membrane was frozen with liquid nitrogen, and then a stress was applied (using a razor blade, a microtome, or a broad ion beam as necessary) to cut the separation membrane so that a radial section or a longitudinal section was exposed. Subsequently, the exposed section was sputtered with platinum under the following conditions. When the section was observed with a SEM at a magnification of 2,000 times, all pores having a diameter of more than 10 nm per visual field were extracted, and the diameter of each pore and the number of the pores were calculated. Then, the total of all diameters was divided by the number of the pores to calculate the average pore diameter per visual field. For pores that were not entirely in the visual field at the end of the image, the diameter of each pore and the number of the pores were calculated in this state. The extraction of the pores was performed after binarizing the analysis image (Huang binarization) with image analysis software "ImageJ". The obtained binarized image was subjected once to noise removal (corresponding to Despeckle in ImageJ) in which all pixels were replaced with the median value of 3 × 3 pixels in the vicinity of each pixel, and the resulting image was used as an analysis image. The extraction of the pores were performed by ImageJ using the Analyze Particles command, and the number of the obtained pores was calculated. The measurement was performed at 5 arbitrary positions, and the average value thereof was adopted as the average pore diameter of the support layer.

(Sputtering)

    Device: (E-1010) manufactured by Hitachi High-Technologies Corporation
Deposition time: 40 seconds
Current value: 20 mA
(SEM)
Device: (SU1510) manufactured by Hitachi High-Technologies Corporation
Acceleration voltage: 5 kV
Probe current: 30

(7) Porosity (%)

The fiber length L (mm) and the mass M (g) of the hollow fiber membrane vacuum-dried at 25°C for 8 hours were measured. The density $\rho_1$ of the hollow fiber membrane was calculated with the following formula using the values of the outer diameter (mm) and the inner diameter (mm) measured in (1) above.

$$\rho_1 = M/[\pi \times \{(\text{outer diameter}/2)^2 - (\text{inner diameter}/2)^2\} \times L]$$

The porosity $\varepsilon$ (%) was calculated with the following formula.

$$\varepsilon = 1 - \rho_1/\rho_2$$

Here, $\rho_2$ is the density of the polymer constituting the hollow fiber membrane.

(8) Area ratio of lamellar crystal

The surface of the separation membrane on the side having the dense layer was sputtered with platinum under the following conditions, and then observed with a SEM at a magnification of 60,000 times. The bright part of the SEM image indicates a lamellar crystal. From the observation image, a lamellar crystal, that is, the bright part of the SEM image was extracted, and the area ratio of the lamellar crystal to the area of the entire observation image was calculated and taken as the area ratio of the lamellar crystal in the surface on the side having the dense layer. The extraction of the lamellar crystal was performed after binarizing the observation image (Otsu binarization) with image analysis software "ImageJ". The obtained binarized image was subjected five times to noise removal (corresponding to Despeckle in ImageJ) in which all pixels were replaced with the median value of $3 \times 3$ pixels in the vicinity of each pixel, and the resulting image was used as an analysis image. In the extraction of the lamellar crystal, all bright parts obtained were extracted by ImageJ using the Analyze Particles command, and the area ratio of the lamellar crystal was calculated from the area of the obtained bright parts. The measurement was performed at 5 arbitrary positions, and the average value thereof was adopted as the area ratio of the lamellar crystal.

(Sputtering)

Device: (E-1010) manufactured by Hitachi High-Technologies Corporation
Deposition time: 40 seconds
Current value: 20 mA
(SEM)
Device: (S5500) manufactured by Hitachi High-Technologies Corporation
Acceleration voltage: 5 kV
Probe current: 30

(9) Method of calculating period of lamellar crystal using SEM image

The surface of the separation membrane on the side having the dense layer was sputtered with platinum under the conditions similar to those in (8) and then observed with a SEM at a magnification of 60,000 times, and the period of the lamellar crystal at this time was calculated. The calculation was performed in accordance with the following method using image processing software ImageJ.

A. The SEM image is read by ImageJ (at a file size of $512 \times 512$ pixels).
B. When Process/FFT/FD Math is executed, an image of an autocorrelation function is output as Result, and then the image type is set to 16 bit.
C. A line profile is performed using the line tool to pass through the point of high luminance at the center of the image and to be horizontal.
D. Analyze/Plot Profile is executed, and Plot of Result is output.
E. The List button is executed to output the intensity and the distance, and a graph is created.
F. The distance from the point of high luminance at the center of the image of the autocorrelation function (output image) to the first proximity peak is measured, and the period of the lamellar crystal is calculated.

(10) Crystallinity of surface

ATR spectrum measurement was performed on the surface of the hollow fiber membrane vacuum-dried at 25°C for 8 hours, using FTIR (FTS-55A) manufactured by BioRad DIGILAB provided with a single reflection ATR attachment device. A diamond prism was used as the ATR crystal, an incident angle was set to 45°, and the number of integrations was 64. From the obtained ATR spectrum, the crystallinity was calculated using the intensity ratio of a predetermined band corresponding to the component constituting the hollow fiber membrane. In the case of a hollow fiber membrane including PMP as a main component, the crystallinity of the surface was calculated from the following formula using the band intensity around 849 $cm^{-1}$ and the band intensity around 1169 $cm^{-1}$.

IR intensity ratio of outer surface = [band intensity around 849 $cm^{-1}$]/[band intensity around 1169 $cm^{-1}$]

Crystallinity (%) = 172.9 × IR intensity ratio of outer surface

(11) Presence or absence of orientation of lamellar crystal, orientation direction of lamellar crystal

The surface of the hollow fiber membrane on the side having the dense layer was sputtered with platinum under the following conditions, and then imaged with a SEM at a magnification of 60,000 times so that the longitudinal direction of the hollow fiber membrane was the horizontal direction. The obtained SEM image was clipped into 512 × 512 pixels, the obtained image was subjected to Fourier transform, then the horizontal direction was set to 0°, and scan was sequentially performed from the center point of the Fourier-transformed image in the range of -90° to 90° with the following method. Specifically, in one scan, a range of 4° with a length of 50 pixels was scanned from the center point of the Fourier-transformed image, and the average intensity in the range was calculated. This scan was performed every 4° from -90° to 90°, and thus a graph was created in which the scan angle was plotted on the axis and each average intensity was plotted on the vertical axis. The value obtained by adding 90° to an angle indicating the maximum value in this graph was taken as the orientation direction of the lamellar crystal.

A specific analysis method using ImageJ is as follows. The SEM image obtained by imaging at a magnification of 60,000 times was clipped into 512 × 512 pixels, and the obtained image was subjected to Fourier transform. The Fourier-transformed image thus obtained was subjected to measurement in which X center and Y center were each 256 pixels, Radius was 50 pixels, and Integration Angle was 2° in Radial Profile Angle in ImageJ, and then Starting Angle was performed every 4° from -88° to 88° to obtain the average intensity at each angle. The obtained data were plotted to obtain a graph with a horizontal axis representing the angle and a vertical axis representing the average intensity.

The presence or absence of the orientation of the lamellar crystal was confirmed with the following method. In a graph in which the angle was plotted on the horizontal axis and the average intensity was plotted on the vertical axis, in a case where the minimum value and the maximum value were not different by 5% or more, that is, the value of 100 × (MAX - MIN)/MAX, wherein MAX represented the maximum value and MIN represented the minimum value, was 5 or less, the lamellar crystal was considered to be not oriented.

(Sputtering)

Device: (E-1010) manufactured by Hitachi High-Technologies Corporation
Deposition time: 40 seconds
Current value: 20 mA
(SEM)
Device: (S5500) manufactured by Hitachi High-Technologies Corporation
Acceleration voltage: 5 kV
Probe current: 30

[PMP]

The following PMP was prepared.
PMP: TPX (registered trademark) DX845 (density: 833 kg/m$^3$, MFR: 9.0 g/10 min)

[Another Raw Material]

Plasticizer: dibutyl phthalate

(Example 1)

To a twin-screw extruder, 35 mass% of PMP and 65 mass% of dibutyl phthalate as a plasticizer were supplied, melt-kneaded at 290°C, then introduced into a melt spinning pack at a spinning temperature of 245°C, and spun downward from an outer annular portion of a discharge spinneret having one spinneret hole (double circular tube type, discharge hole diameter: 2.0 mm, discharge gap: 0.10 mm). At this time, the hollow portion forming gas was air discharged as accompanying airflow from an inner tube in the double-tube spinneret. The spun hollow fiber was passed through an air gap, then introduced into a cooling bath with triacetin as a solvent, and wound with a winder so that the draft ratio was 8. At this time, the air gap distance was set to 60 mm. Here, as a filter in the melt spinning pack, a metal filter having a diameter of 200 $\mu$m was used. The wound hollow fiber was immersed in isopropanol for 24 hours, washed, and vacuum-dried at room temperature to remove isopropanol, and thus a hollow fiber membrane was obtained. Table 1 shows the physical properties of the obtained hollow fiber membrane. The obtained hollow fiber membrane had an area ratio of the lamellar crystal of 42.3% in the surface (1) on the side having the dense layer, a porosity of 55%, a $N_2$ permeability of 42 GPU, a $N_2$ permeability change rate Y/X before and after immersion in chloroform of 0.81, and a gas separation coefficient $\alpha$ ($CO_2/N_2$) of 4.9, and had excellent permeability and high organic solvent resistance.

(Example 2)

A hollow fiber membrane was obtained in the same manner as in Example 1 except that the air gap distance was set to 45 mm. As a result, as shown in Table 1, the obtained hollow fiber membrane had an area ratio of the lamellar crystal of 38.7% in the surface (1) on the side having the dense layer, a $N_2$ permeability X of 60 GPU, and a $N_2$ permeability change rate Y/X before and after immersion in chloroform of 0.78.

(Example 3)

A hollow fiber membrane was obtained in the same manner as in Example 1 except that the air gap distance was set to 40 mm. As a result, as shown in Table 1, the obtained hollow fiber membrane had an area ratio of the lamellar crystal of 30.8% in the surface (1) on the side having the dense layer, a $N_2$ permeability X of 68 GPU, and a $N_2$ permeability change rate Y/X before and after immersion in chloroform of 0.75.

(Example 4)

A hollow fiber membrane was obtained in the same manner as in Example 1 except that the air gap distance was set to 35 mm. As a result, as shown in Table 1, the obtained hollow fiber membrane had an area ratio of the lamellar crystal of 28.7% in the surface (1) on the side having the dense layer, and a $N_2$ permeability change rate Y/X before and after immersion in chloroform of 0.63.

(Example 5)

A hollow fiber membrane was obtained in the same manner as in Example 1 except that the discharge gap was set to 0.15 mm and the air gap distance was set to 45 mm. As a result, as shown in Table 1, the obtained hollow fiber membrane had an area ratio of the lamellar crystal of 27.3% in the surface (1) on the side having the dense layer, and a $N_2$ permeability change rate Y/X before and after immersion in chloroform of 0.57.

(Example 6)

A hollow fiber membrane was obtained in the same manner as in Example 5 except that the air gap distance was set to 35 mm. As a result, as shown in Table 1, the obtained hollow fiber membrane had an area ratio of the lamellar crystal of 24.7% in the surface (1) on the side having the dense layer, and a $N_2$ permeability change rate Y/X before and after immersion in chloroform of 0.46.

(Example 7)

A hollow fiber membrane was obtained in the same manner as in Example 5 except that the air gap distance was set to 30 mm. As a result, as shown in Table 1, the obtained hollow fiber membrane had an area ratio of the lamellar crystal of 22.9% in the surface (1) on the side having the dense layer, and a $N_2$ permeability change rate Y/X before and after immersion in chloroform of 0.44.

(Example 8)

A hollow fiber membrane was obtained in the same manner as in Example 1 except that the coagulation bath type was N-methylpyrrolidone and the air gap distance was set to 45 mm. As a result, as shown in Table 1, the obtained hollow fiber membrane had an area ratio of the lamellar crystal of 34.9% in the surface (1) on the side having the dense layer, and a $N_2$ permeability change rate Y/X before and after immersion in chloroform of 0.78. Furthermore, the dense layer thickness was 0.19 $\mu$m, and the $N_2$ permeability was increased to 150 GPU due to the thinning of the layer.

(Comparative Example 1)

A hollow fiber membrane was obtained in the same manner as in Example 1 except that the draft ratio was set to 231 and the discharge gap was set to 0.35 mm. As a result, as shown in Table 2, in the obtained hollow fiber membrane, a lamellar crystal was not observed (that is, the area ratio of a lamellar crystal was 0%) in the surface (1) on the side having the dense layer, and the $N_2$ permeability change rate Y/X before and after immersion in chloroform was as low as 0.00.

(Comparative Example 2)

A hollow fiber membrane was obtained in the same manner as in Example 7 except that the discharge gap was set to 0.35 mm. As a result, as shown in Table 2, in the obtained hollow fiber membrane, a lamellar crystal was not observed (that is, the area ratio of a lamellar crystal was 0%) in the surface (1) on the side having the dense layer, and the $N_2$ permeability change rate Y/X before and after immersion in chloroform was as low as 0.00.

(Comparative Example 3)

A hollow fiber membrane was obtained in the same manner as in Example 1 except that spinning was performed with 100 mass% of PMP at a draft ratio of 700 and, after air cooling, stretching was performed at a stretching temperature of 130°C and a stretching magnification of 2.3 times. A cooling bath was not used, and thus the air gap distance was absent. As a result, as shown in Table 2, the obtained hollow fiber membrane had a porosity of 20%, and a $N_2$ permeability as low as 3 GPU. The lamellar crystal ratio was as very low as 1%, and calculation of the period was impossible.

(Example 9)

A hollow fiber membrane was obtained in the same manner as in Example 1 except that the air gap distance was set to 75 mm. As a result, as shown in Table 2, the obtained hollow fiber membrane had an area ratio of the lamellar crystal of 46.7% in the surface (1) on the side having the dense layer, a $N_2$ permeability X of 33 GPU, and a $N_2$ permeability change rate Y/X before and after immersion in chloroform of 0.90.

(Example 10)

A hollow fiber membrane was obtained in the same manner as in Example 1 except that the discharge gap was set to 0.20 mm and the air gap distance was set to 30 mm. As a result, as shown in Table 2, the obtained hollow fiber membrane had an area ratio of the lamellar crystal of 16.8% in the surface (1) on the side having the dense layer, and a $N_2$ permeability change rate Y/X before and after immersion in chloroform of 0.31.

(Example 11)

A hollow fiber membrane was obtained in the same manner as in Example 8 except that the air gap distance was set to 30 mm. As a result, as shown in Table 2, the obtained hollow fiber membrane had an area ratio of the lamellar crystal of 28.1% in the surface (1) on the side having the dense layer, a $N_2$ permeability X of 183 GPU, and a $N_2$ permeability change rate Y/X before and after immersion in chloroform of 0.49.

[Table 1-1]

| | | Example 1 | Example 2 | Example 3 | Example 4 |
|---|---|---|---|---|---|
| PMP | [wt%] | 35 | 35 | 35 | 35 |
| Plasticizer | [wt%] | 65 | 65 | 65 | 65 |
| Kind of plasticizer | [-] | Dibutyl phthalate | Dibutyl phthalate | Dibutyl phthalate | Dibutyl phthalate |
| Discharge gap | [mm] | 0.10 | 0.10 | 0.10 | 0.10 |
| Free running distance | [mm] | 60 | 45 | 40 | 35 |
| Coagulation bath type | [-] | Triacetin | Triacetin | Triacetin | Triacetin |
| Solubility parameter distance between plasticizer and coagulation bath | [Mpa1/2] | 7 | 7 | 7 | 7 |
| Solubility parameter distance between PMP and coagulation bath | [Mpa1/2] | 6 | 6 | 6 | 6 |
| Kind of washing solvent | [-] | Isopropanol | Isopropanol | Isopropanol | Isopropanol |
| Main component | [-] | PMP | PMP | PMP | PMP |
| Area ratio of lamellar crystal in surface | [%] | 42.3 | 38.7 | 30.8 | 28.7 |
| Lamellar period in surface | [nm] | 46.7 | 43.3 | 36.7 | 33.3 |
| Presence or absence of orientation of lamellar crystal in surface | [-] | Present | Present | Present | Present |
| Orientation direction of lamellar crystal in surface | [°] | 85 | 84 | 104 | 109 |
| Crystallinity of surface | [%] | 29.0 | 25.7 | 20.6 | 18.9 |
| Porosity | [%] | 55 | 53 | 52 | 51 |
| Dense layer | [-] | Present | Present | Present | Present |
| Dense layer thickness | [μm] | 0.58 | 0.39 | 0.38 | 0.36 |
| Dense layer position | [-] | Outer surface | Outer surface | Outer surface | Outer surface |
| Shape | [-] | Hollow fiber | Hollow fiber | Hollow fiber | Hollow fiber |
| $N_2$ permeability X | [GPU] | 42 | 60 | 68 | 82 |
| $N_2$ permeability change rate Y/X before and after immersion in chloroform | [-] | 0.81 | 0.78 | 0.75 | 0.63 |
| $CO_2/N_2$ separation coefficient α | [-] | 4.9 | 4.6 | 4.2 | 3.8 |

[Table 1-2]

| | | Example 5 | Example 6 | Example 7 | Example 8 |
|---|---|---|---|---|---|
| PMP | [wt%] | 35 | 35 | 35 | 35 |
| Plasticizer | [wt%] | 65 | 65 | 65 | 65 |
| Kind of plasticizer | [-] | Dibutyl phthalate | Dibutyl phthalate | Dibutyl phthalate | Dibutyl phthalate |
| Discharge gap | [mm] | 0.15 | 0.15 | 0.15 | 0.10 |
| Free running distance | [mm] | 45 | 35 | 30 | 45 |
| Coagulation bath type | [-] | Triacetin | Triacetin | Triacetin | N-methylpyrrolidone |
| Solubility parameter distance between plasticizer and coagulation bath | [Mpa1/2] | 7 | 7 | 7 | 5 |
| Solubility parameter distance between PMP and coagulation bath | [Mpa1/2] | 6 | 6 | 6 | 11 |
| Kind of washing solvent | [-] | Isopropanol | Isopropanol | Isopropanol | Isopropanol |
| Main component | [-] | PMP | PMP | PMP | PMP |
| Area ratio of lamellar crystal in surface | [%] | 27.3 | 24.7 | 22.9 | 34.9 |
| Lamellar period in surface | [nm] | 33.3 | 23.3 | 23.3 | 40.0 |
| Presence or absence of orientation of lamellar crystal in surface | [-] | Present | Absent | Absent | Present |
| Orientation direction of lamellar crystal in surface | [°] | 115 | – | – | 100 |
| Crystallinity of surface | [%] | 18.1 | 16.5 | 14.8 | 23.6 |
| Porosity | [%] | 49 | 48 | 45 | 52 |
| Dense layer | [-] | Present | Present | Present | Present |
| Dense layer thickness | [μm] | 0.44 | 0.42 | 0.39 | 0.19 |
| Dense layer position | [-] | Outer surface | Outer surface | Outer surface | Outer surface |
| Shape | [-] | Hollow fiber | Hollow fiber | Hollow fiber | Hollow fiber |
| $N_2$ permeability X | [GPU] | 53 | 57 | 63 | 150 |
| $N_2$ permeability change rate Y/X before and after immersion in chloroform | [-] | 0.57 | 0.46 | 0.44 | 0.78 |
| $CO_2/N_2$ separation coefficient α | [-] | 3.6 | 2.9 | 2.8 | 4.1 |

[Table 2]

| | | Comparative Example 1 | Comparative Example 2 | Comparative Example 3 | Example 9 | Example 10 | Example 11 |
|---|---|---|---|---|---|---|---|
| PMP | [wt%] | 35 | 35 | 100 | 35 | 35 | 35 |
| Plasticizer | [wt%] | 65 | 65 | 0 | 65 | 65 | 65 |
| Kind of plasticizer | [-] | Dibutyl phthalate | Dibutyl phthalate | – | Dibutyl phthalate | Dibutyl phthalate | Dibutyl phthalate |
| Discharge gap | [mm] | 0.35 | 0.35 | 0.30 | 0.10 | 0.20 | 0.10 |
| Free running distance | [mm] | 20 | 30 | – | 75 | 30 | 30 |
| Coagulation bath type | [-] | Triacetin | Triacetin | – | Triacetin | Triacetin | N-methylpyrrolidone |
| Solubility parameter distance between plasticizer and coagulation bath | [Mpa1/2] | 7 | 7 | – | 7 | 7 | 5 |
| Solubility parameter distance between PMP and coagulation bath | [Mpa1/2] | 6 | 6 | – | 6 | 6 | 11 |
| Kind of washing solvent | [-] | Isopropanol | Isopropanol | Isopropanol | Isopropanol | Isopropanol | Isopropanol |
| Main component | [-] | PMP | PMP | PMP | PMP | PMP | PMP |
| Area ratio of lamellar crystal in surface | [%] | 0.0 | 0.0 | 1.0 | 46.7 | 16.8 | 28.1 |
| Lamellar period in surface | [nm] | – | – | – | 50.9 | 19.2 | 30.0 |
| Presence or absence of orientation of lamellar crystal in surface | [-] | – | – | – | Present | Absent | Absent |
| Orientation direction of lamellar crystal in surface | [°] | – | – | – | 83 | – | – |
| Crystallinity of surface | [%] | 0.0 | 0.0 | 3.2 | 33.2 | 10.5 | 17.0 |
| Porosity | [%] | 45 | 19 | 18 | 56 | 44 | 49 |
| Dense layer | [-] | Present | Present | Present | Present | Present | Present |
| Dense layer thickness | [nm] | 1.80 | 1.56 | 0.60 | 0.70 | 0.40 | 0.16 |
| Dense layer position | [-] | Outer surface | Outer surface | Outer surface | Outer surface | Outer surface | Outer surface |
| Shape | [-] | Hollow fiber | Hollow fiber | Hollow fiber | Hollow fiber | Hollow fiber | Hollow fiber |
| $N_2$ permeability X | [GPU] | 30 | 38 | 3 | 33 | 64 | 183 |
| $N_2$ permeability change rate Y/X before and after immersion in chloroform | [-] | 0.00 | 0.00 | 0.19 | 0.90 | 0.31 | 0.49 |
| $CO_2/N_2$ separation coefficient α | [-] | 1.2 | 1.1 | 5.5 | 5.4 | 2.5 | 3.5 |

The separation membranes obtained in Examples 1 to 11 had an area ratio of the lamellar crystal satisfying the requirement of the present invention in the surface (1) on the side having the dense layer, and all of the separation membranes had high solvent resistance such that the $N_2$ permeability change rate Y/X before and after immersion in chloroform was 0.3 or more. Meanwhile, all of the separation membranes in Comparative Examples 1 to 3, which had a low area ratio of the lamellar crystal in the surface (1) on the side having the dense layer, showed a low $N_2$ permeability change rate Y/X before and after immersion in chloroform.

In all of Examples 1 to 11, the number of voids larger than 10 $\mu$m in the support layer was 0.

INDUSTRIAL APPLICABILITY

The separation membrane of the present invention can be suitably used for separating a gas from a liquid or applying a gas to a liquid. For example, in a semiconductor manufacturing line, a liquid crystal color filter manufacturing line, an ink manufacturing for an inkjet printer, and the like, the separation membrane can be suitably used in a degassing membrane that reduces the amount of a dissolved gas in water, an aqueous solution, an organic solvent, or a resist liquid, a gas exchange membrane in an oxygenator for a medical application, and the like. In particular, as a degassing membrane, the separation membrane is very useful for degassing of a photoresist liquid and a developer used for lithography in a semiconductor manufacturing line.

DESCRIPTION OF REFERENCE SIGNS

1: Membrane surface
2: Dense layer thickness
3: Separation membrane longitudinal direction

**Claims**

1. A separation membrane comprising:

   poly(4-methyl-1-pentene) as a main component;
   a dense layer in at least one surface layer; and
   a lamellar crystal at an area ratio of 5 to 50% in a surface (1) on a side having the dense layer.

2. The separation membrane according to claim 1, having a porosity of 30 to 70%.

3. The separation membrane according to claim 1 or 2, wherein the surface (1) has a crystallinity of 5 to 30%.

4. The separation membrane according to any one of claims 1 to 3, wherein the lamellar crystal has a period of 10 to 80 nm in the surface (1).

5. The separation membrane according to any one of claims 1 to 4, wherein the lamellar crystal in the surface (1) has an orientation.

6. The separation membrane according to any one of claims 1 to 5, wherein the lamellar crystal in the surface (1) has an orientation direction of 60 to 120° with respect to a separation membrane longitudinal direction.

7. The separation membrane according to any one of claims 1 to 6, wherein the dense layer has a thickness of 0.1 to 0.8 $\mu$m.

8. The separation membrane according to any one of claims 1 to 7, having a hollow fiber shape.

9. The separation membrane according to claim 8, wherein the surface (1) is an outer surface of the separation membrane having the hollow fiber shape.

10. The separation membrane according to any one of claims 1 to 9, being a gas-permeable membrane to be used for separating a gas from a liquid or applying a gas to a liquid.

11. The separation membrane according to any one of claims 1 to 10, having a gas separation coefficient $\alpha$ ($CO_2/N_2$) of 1 or more.

**12.** The separation membrane according to any one of claims 1 to 11, having a $N_2$ permeability of 5 GPU or more at a differential pressure of 100 kPa.

**13.** A separation membrane comprising:

poly(4-methyl-1-pentene) as a main component; and
a dense layer in at least one surface layer,
the separation membrane having a value of a $N_2$ permeability change rate Y/X of 0.30 to 1.20 wherein
X represents a $N_2$ permeability of the separation membrane at a differential pressure of 100 kPa, and
Y represents a $N_2$ permeability of the separation membrane at a differential pressure of 100 kPa after the separation membrane is immersed in chloroform for 5 seconds.

**14.** A degassing membrane module comprising:

a case; and
the separation membrane according to any one of claims 1 to 13, wherein
the separation membrane is filled into the case.

**15.** A method for manufacturing a separation membrane, the method comprising:

(1) a preparation step of melt-kneading a mixture containing 10 to 50 mass% of poly(4-methyl-1-pentene) and 50 to 90 mass% of a plasticizer to obtain a resin composition; and
(2) a forming step of discharging the resin composition from a discharge spinneret having a gap of 0.05 to 0.3 mm and, after the resin composition is passed through an air gap having a distance from a bottom surface of the discharge spinneret to a solvent surface of 30 to 80 mm and the resin composition is introduced into a cooling bath, winding the resin composition to obtain a resin molded product.

**16.** The method for manufacturing a separation membrane according to claim 15, wherein in the forming step, a solvents is used in the cooling bath, the solvent having a solubility parameter distance Ra to poly(4-methyl-1-pentene) in a range of 5 to 13 and a solubility parameter distance Rb to the plasticizer in a range of 4 to 10.

## Fig. 1

## Fig. 2

## Fig. 3

## Fig. 4

500nm

Fig. 5

3

Fig. 6

Fig. 7

Fig. 8

## INTERNATIONAL SEARCH REPORT

| International application No. |
|---|
| **PCT/JP2023/030075** |

**A. CLASSIFICATION OF SUBJECT MATTER**

***B01D 61/00***(2006.01)i; ***B01D 63/02***(2006.01)i; ***B01D 69/00***(2006.01)i; ***B01D 69/08***(2006.01)i; ***B01D 71/26***(2006.01)i; ***D01F 6/04***(2006.01)i

FI: B01D71/26; B01D69/00; B01D69/08; B01D61/00; B01D63/02; D01F6/04 Z

According to International Patent Classification (IPC) or to both national classification and IPC

**B. FIELDS SEARCHED**

Minimum documentation searched (classification system followed by classification symbols)

B01D53/22; B01D61/00-71/82; C02F1/44; D01F1/00-6/96; D01F9/00-9/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6-246139 A (DAINIPPON INK & CHEMICALS INC.) 06 September 1994 (1994-09-06) claims, paragraphs [0014], [0015] | 1-16 |
| A | JP 6-246140 A (DAINIPPON INK & CHEMICALS INC.) 06 September 1994 (1994-09-06) claims, examples | 1-16 |
| A | JP 2010-269307 A (NIPRO CORP.) 02 December 2010 (2010-12-02) claims, examples | 1-16 |
| A | JP 2017-516652 A (3M INNOVATIVE PROPERTIES CO.) 22 June 2017 (2017-06-22) claims, examples | 1-16 |
| A | US 6409921 B1 (MEMBRANA GMBH) 25 June 2002 (2002-06-25) claims | 1-16 |
| A | JP 2002-535115 A (MEMBRANA GMBH) 22 October 2002 (2002-10-22) claims, examples 1-7 | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/030075**

| Patent document cited in search report | | | Publication date (day/month/year) | Patent family member(s) | | | Publication date (day/month/year) |
|---|---|---|---|---|---|---|---|
| JP | 6-246139 | A | 06 September 1994 | (Family: none) | | | |
| JP | 6-246140 | A | 06 September 1994 | (Family: none) | | | |
| JP | 2010-269307 | A | 02 December 2010 | (Family: none) | | | |
| JP | 2017-516652 | A | 22 June 2017 | US claims, examples US WO EP KR CN BR | 2015/0258500 2018/0272290 2015/138723 3116633 10-2016-0132069 106659983 112016021096 | A1 A1 A1 A1 A A A | |
| US | 6409921 | B1 | 25 June 2002 | JP WO EP KR | 2001-510724 1999/004891 999889 10-0567153 | A A1 A1 B1 | |
| JP | 2002-535115 | A | 22 October 2002 | US claims, examples 1-7 WO EP CN KR | 6497752 2000/043114 1144096 1336848 10-0654083 | B1 A1 A1 A B1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002535114 A

- JP 7116483 A

**Non-patent literature cited in the description**

- *Ind. Eng. Chem. Res.*, 2011, vol. 50, 3798-3817

- **CHARLES HANSEN**. *Hansen Solubility Parameter in Practice*